(19) Europäisches Patentamt
European Patent Office
Office européen des brevets

(11) **EP 3 179 473 A1**

(12) **EUROPEAN PATENT APPLICATION**
published in accordance with Art. 153(4) EPC

(43) Date of publication:
**14.06.2017 Bulletin 2017/24**

(21) Application number: **16762948.4**

(22) Date of filing: **06.06.2016**

(51) Int Cl.:
*G10L 15/183* (2013.01)    *G10L 15/06* (2013.01)

(86) International application number:
**PCT/CN2016/084959**

(87) International publication number:
**WO 2017/071226 (04.05.2017 Gazette 2017/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.10.2015 CN 201510719243**

(71) Applicants:
• **LE Holdings (Beijing) Co., Ltd.**
**Beijing 100025 (CN)**

• **Le Shi Zhi Xin Electronic Technology (Tianjin) Limited**
**Tianjin 300467 (CN)**

(72) Inventor: **YAN, Zhiyong**
**Tianjin 300467 (CN)**

(74) Representative: **Kutzenberger Wolff & Partner**
**Theodor-Heuss-Ring 23**
**50668 Köln (DE)**

(54) **TRAINING METHOD AND APPARATUS FOR LANGUAGE MODEL, AND DEVICE**

(57) The present disclosure provides a language model training method and apparatus and a device. The method includes: obtaining a universal language model in an offline training mode, and clipping the universal language model to obtain a clipped language model; obtaining a log language model of logs within a preset time period in an online training mode; fusing the clipped language model with the log language model to obtain a first fusion language model used for carrying out first time decoding; and fusing the universal language model with the log language model to obtain a second fusion language model used for carrying out second time decoding. The method is used for solving the problem that a language model obtained offline in the prior art has poor coverage on new corpora, resulting in a reduced language recognition rate.

Obtaining a universal language model in an offline training mode, and clipping the universal language model to obtain a clipped language model — 101

Obtaining a log language model of logs within a preset time period in an online training mode — 102

Fusing the clipped language model with the log language model to obtain a first fusion language model used for carrying out first time decoding — 103

Fusing the universal language model with the log language model to obtain a second fusion language model used for carrying out second time decoding — 104

**FIG. 1**

EP 3 179 473 A1

**Description**

**CROSS-REFERENCE TO RELATED APPLICATIONS**

The present disclosure claims the priority of Chinese Application No. 2015107192435, filed on October 29, 2015, and entitled "LANGUAGE MODEL TRAINING METHOD AND APPARATUS AND DEVICE", the entire contents of which are herein incorporated by reference.

**FIELD OF TECHNOLOGY**

Embodiments of the present disclosure relates to a natural language processing technology, and in particular, to a language model training method and apparatus and a device.

**BACKGROUND**

The object of a language model (Model Language, LM) is to establish probability distribution that can describe the emergence of a given word sequence in a language. That is to say, the language model is a model that describes word probability distribution and a model that can reliably reflect the probability distribution of words used in language identification.

The language modeling technology has been widely used in machine learning, handwriting recognition, voice recognition and other fields. For example, the language model can be used for obtaining a word sequence having the maximal probability in a plurality of word sequences in the voice recognition, or giving a plurality of words to predict the next most likely occurring word, etc.

At present, common language model training methods include obtaining universal language models offline, and carrying out off-line interpolation with some personal names, place names and other models via the universal language models to obtain trained language models, and these language models do not cover a real-time online log update mode, resulting in poor coverage of new corpora (such as new words, hot words or the like) in a use process, such that the language recognition rate is reduced.

**SUMMARY**

In view of the defects in the prior art, embodiments the present disclosure provides a language model training method and apparatus and a device, in order to solve the problem that a language model obtained offline in the prior art has poor coverage on new corpora, resulting in a reduced language recognition rate.

The embodiments of the present disclosure provide a language model training method, including:

obtaining a universal language model in an offline training mode, and clipping the universal language model to obtain a clipped language model;

obtaining a log language model of logs within a preset time period in an online training mode;

fusing the clipped language model with the log language model to obtain a first fusion language model used for carrying out first time decoding; and

fusing the universal language model with the log language model to obtain a second fusion language model used for carrying out second time decoding.

Optionally, the obtaining a log language model of logs within a preset time period in an online training mode includes:

obtaining log information within the preset time period, filtering the log information, and carrying out word segmentation processing on the filtered log information to obtain a log model training corpus within the preset time period; and

training the log model training corpus to obtain the log language model.

Optionally, the fusing the clipped language model with the log language model to obtain a first fusion language model used for carrying out first time decoding includes:

carrying out interpolation merging on the clipped language model and the log language model in an interpolation mode to obtain the first fusion language model;

and/or,

the fusing the universal language model with the log language model to obtain a second fusion language model used for carrying out second time decoding includes:

carrying out interpolation merging on the universal language model and the log language model in the interpolation mode to obtain the second fusion language model.

Optionally, before the carrying out interpolation merging on the clipped language model and the log language model in an interpolation mode to obtain the first fusion language model, the language model training method further includes:

adjusting a single sentence probability in the clipped language model according to a preset rule to obtain an adjusted language model;

correspondingly, the carrying out interpolation merging on the clipped language model and the log language model in an interpolation mode specifically includes:

carrying out interpolation merging on the adjusted language model and the log language model;

and/or,

before the carrying out interpolation merging on the universal language model and the log language model in the interpolation mode, the language model training method further includes:

adjusting the single sentence probability in the universal language model according to the preset rule to obtain an adjusted universal language model; and

the carrying out interpolation merging on the universal language model and the log language model in the interpolation mode specifically includes:

carrying out interpolation merging on the adjusted universal language model and the log language model.

Optionally, the clipped language model is a tri-gram language model, and correspondingly, the first fusion language model is a tri-gram fusion language model; and
the universal language model is a tetra-gram language model, and correspondingly, the second fusion language model is a tetra-gram fusion language model.
Optionally, the obtaining a universal language model in an offline training mode includes:

collecting a model training corpus of each field;

for each field, training the model training corpus of the field to obtain the language model of the field; and

generating the collected language models corresponding to all fields into the universal language model in the interpolation mode.

Optionally, the generating the collected language models corresponding to all fields into the universal language model in the interpolation mode includes:

generating the collected language models corresponding to all fields into the universal language model in a maximum posterior probability interpolation mode or a direct model interpolation mode.

Optionally, the clipping the universal language model to obtain a clipped language model includes:

clipping the universal language model in a language model clipping mode based on entropy to obtain a second language model LM2;

clipping the second language model LM2 in the language model clipping mode based on entropy to obtain a third language model LM3; and

extracting the tri-gram language model from the third language model LM3, and clipping the extracted tri-gram language model to obtain the clipped language model LM4.

Optionally, the clipping the universal language model to obtain a clipped language model includes:

calculating a first confusion value of the universal language model on a universal test set, and obtaining a fluctuation range of the first confusion value;

clipping the universal language model in the language model clipping mode based on entropy to obtain the second language model LM2, wherein the scale of the second language model LM2 is applicable to the fluctuation range of the first confusion value;

calculating a second confusion value of the second language model LM2 on the universal test set, and obtaining the fluctuation range of the second confusion value;

clipping the second language model LM2 in the language model clipping mode based on entropy to obtain the third language model LM3, wherein the scale of the third language model LM3 is applicable to the fluctuation range of the second confusion value;

extracting the tri-gram language model from the third language model LM3, and clipping the extracted tri-gram language model to obtain the clipped language model LM4; and

calculating a third confusion value of the extracted tri-gram language model on the universal test set, and obtaining the fluctuation range of the third confusion value, wherein the scale of the clipped language model LM4 is applicable to the fluctuation range of the third confusion value.

The embodiments of the present disclosure provide a language model updating method in a decoder cluster, including:

selecting N decoding servers of language models to be updated in the decoder cluster;

stopping the decoding service of the N decoding servers, loading a compiled first fusion language model and a compiled second fusion language model in the N decoding servers;

starting the N decoding servers to allow each decoding server to employ the first compiled fusion language model to carry out first time decoding and employ the second compiled fusion language model to carry out second time decoding;

judging whether the decoding process of each decoding server is normally completed, and if so, backing up the first compiled fusion language model and the second compiled fusion language model for each decoding server among the N decoding servers; and

repeating the step of selecting the N decoding servers of the language models to be updated, until all decoding servers in the decoder cluster are updated; and

wherein, the N is a positive integer and is smaller than or equal to 1/3 of the total number of the decoding servers in the decoder cluster.

Optionally, the method further includes:

if the decoding process of at least one decoding server is not normally completed, stopping the decoding service of the at least one decoding server, and loading an original first language model and an original second language model that are backed up in the at least one decoding server; and starting the at least one decoding server that loads the original first language model and the original second language model.

Optionally, before the loading a compiled first fusion language model and a compiled second fusion language model in the N decoding servers, the method further includes:

respectively compiling the first fusion language model and the second fusion language model to obtain a first decoding state diagram of the first fusion language model and a second decoding state diagram of the second fusion language model; employing a universal test set to verify the language recognition rates of the first decoding state diagram and the second decoding state diagram; and

if the language recognition rates are within a preset range, confirming that the first fusion language model and the second fusion language model are verified, and obtaining the compiled first fusion language model and the compiled second fusion language model.

The embodiments of the present disclosure provides a language model training apparatus, including:

a universal language model obtaining unit, used for obtaining a universal language model in an offline training mode;

a clipping unit, used for clipping the universal language model to obtain a clipped language model;

a log language model obtaining unit, used for obtaining a log language model of logs within a preset time period in an online training mode;

a first interpolation merging unit, used for fusing the clipped language model with the log language model to obtain a first fusion language model used for carrying out first time decoding; and

a second interpolation merging unit, used for fusing the universal language model with the log language model to obtain a second fusion language model used for carrying out second time decoding.

Optionally, the log language model obtaining unit is specifically used for:

obtaining log information within the preset time period, filtering the log information, and carrying out word segmentation processing on the filtered log information to obtain a log model training corpus within the preset time period; and

training the log model training corpus to obtain the log language model.

Optionally, the first interpolation merging unit is specifically used for:

carrying out interpolation merging on the clipped language model and the log language model in an interpolation mode to obtain the first fusion language model;

and/or,

the second interpolation merging unit is specifically used for:

carrying out interpolation merging on the universal language model and the log language model in the interpolation mode to obtain the second fusion language model.

Optionally, the first interpolation merging unit is specifically used for:

adjusting a single sentence probability in the clipped language model according to a preset rule to obtain an adjusted language model;

carrying out interpolation merging on the adjusted language model and the log language model in the interpolation mode to obtain the first fusion language model;

and/or,

the second interpolation merging unit is specifically used for:

adjusting the single sentence probability in the universal language model according to the preset rule to obtain an adjusted universal language model; and

carrying out interpolation merging on the adjusted universal language model and the log language model in the interpolation mode to obtain the second fusion language model.

Optionally, the clipped language model is a tri-gram language model, and correspondingly, the first fusion language model is a tri-gram fusion language model; and
the universal language model is a tetra-gram language model, and correspondingly, the second fusion language model is a tetra-gram fusion language model.

Optionally, the universal language model obtaining unit is specifically used for:

collecting a model training corpus of each field;

for each field, training the model training corpus of the field to obtain the language model of the field; and

generating the collected language models corresponding to all fields into the universal language model in the interpolation mode.

Optionally, the universal language model obtaining unit is specifically used for:

collecting a model training corpus of each field;

for each field, training the model training corpus of the field to obtain the language model of the field; and

generating the collected language models corresponding to all fields into the universal language model in a maximum posterior probability interpolation mode or a direct model interpolation mode.

Optionally, the clipping unit is specifically used for:

clipping the universal language model in a language model clipping mode based on entropy to obtain a second language model LM2;

clipping the second language model LM2 in the language model clipping mode based on entropy to obtain a third language model LM3; and

extracting the tri-gram language model from the third language model LM3, and clipping the extracted tri-gram language model to obtain the clipped language model LM4.

Optionally, the clipping unit is specifically used for:

calculating a first confusion value of the universal language model on a universal test set, and obtaining a fluctuation range of the first confusion value;

clipping the universal language model in the language model clipping mode based on entropy to obtain the second language model LM2, wherein the scale of the second language model LM2 is applicable to the fluctuation range of the first confusion value;

calculating a second confusion value of the second language model LM2 on the universal test set, and obtaining the fluctuation range of the second confusion value;

clipping the second language model LM2 in the language model clipping mode based on entropy to obtain the third language model LM3, wherein the scale of the third language model LM3 is applicable to the fluctuation range of the second confusion value;

extracting the tri-gram language model from the third language model LM3, and clipping the extracted tri-gram language model to obtain the clipped language model LM4; and

calculating a third confusion value of the extracted tri-gram language model on the universal test set, and obtaining the fluctuation range of the third confusion value, wherein the scale of the clipped language model LM4 is applicable to the fluctuation range of the third confusion value.

The embodiments of the present disclosure provide a device, including any above language model training apparatus.

The embodiments of the present disclosure further provide a language model training apparatus, including:

a processor, a memory, a communication interface and a bus; wherein,

the processor, the memory and the communication interface communicate with each other by the bus;

the communication interface is used for completing the information transmission of the decoding server and a communication device of a local server;

the processor is used for invoking a logic instruction in the memory to execute the following method:

obtaining a universal language model in an offline training mode, and clipping the universal language model to obtain a clipped language model; obtaining a log language model of logs within a preset time period in an online training mode; fusing the clipped language model with the log language model to obtain a first fusion language model used for carrying out first time decoding; and fusing the universal language model with the log language model to obtain a second fusion language model used for carrying out second time decoding.

The embodiments of the present disclosure further provide a computer program, including a program code, wherein the program code is used for executing the following operations:

obtaining a universal language model in an offline training mode, and clipping the universal language model to obtain a clipped language model;

obtaining a log language model of logs within a preset time period in an online training mode; obtaining a log language model of logs within a preset time period in an online training mode;

fusing the clipped language model with the log language model to obtain a first fusion language model used for carrying out first time decoding; and

fusing the universal language model with the log language model to obtain a second fusion language model used for carrying out second time decoding.

The embodiments of the present disclosure further provide a storage medium, used for storing the above computer program.

The embodiments of the present disclosure further provide a language model updating apparatus in a decoder cluster, including:

a processor, a memory, a communication interface and a bus; wherein,

the processor, the memory and the communication interface communicate with each other by the bus;

the communication interface is used for completing the information transmission of the decoding server and a communication device of a local server;

the processor is used for invoking a logic instruction in the memory to execute the following method:

selecting N decoding servers of language models to be updated in the decoder cluster; stopping the decoding service of the N decoding servers, loading a compiled first fusion language model and a compiled second fusion language model in the N decoding servers; starting the N decoding servers to allow each decoding server to employ the first compiled fusion language model to carry out first time decoding and employ the second compiled fusion language model to carry out second time decoding; judging whether the decoding process of each decoding server is normally completed, and if so, backing up the first compiled fusion language model and the second compiled fusion language model for each decoding server among the N decoding servers; and repeating the step of selecting the N decoding servers of the language models to be updated, until all decoding servers in the decoder cluster are updated; wherein, the N is a positive integer and is smaller than or equal to 1/3 of the total number of the decoding servers in the decoder cluster.

The embodiments of the present disclosure further provide a computer program, including a program code, wherein the program code is used for executing the following operations:

selecting N decoding servers of language models to be updated in the decoder cluster;

stopping the decoding service of the N decoding servers, loading a compiled first fusion language model and a compiled second fusion language model in the N decoding servers;

starting the N decoding servers to allow each decoding server to employ the first compiled fusion language model to carry out first time decoding and employ the second compiled fusion language model to carry out second time decoding;

judging whether the decoding process of each decoding server is normally completed, and if so, backing up the first compiled fusion language model and the second compiled fusion language model for each decoding server among the N decoding servers; and

repeating the step of selecting the N decoding servers of the language models to be updated, until all decoding servers in the decoder cluster are updated; and

wherein, the N is a positive integer and is smaller than or equal to 1/3 of the total number of the decoding servers in the decoder cluster.

The embodiments of the present disclosure further provide a storage medium, used for storing the above computer program.

It can be seen from the above technical solutions that, according to the language model training method and apparatus and the device of the present disclosure, the universal language model is obtained in the offline training mode, the log language model is obtained in the online training mode, and then, the first fusion language model used for carrying out first time decoding and the second fusion language model used for carrying out second time decoding are obtained through the universal language model and the log language model, since the log language model is generated by the corpora of new words, hot words or the like, the problem that a language model obtained offline in the prior art has poor coverage on new corpora, resulting in a reduced language recognition rate, can be solved, therefore, the language recognition rate can be improved better, and the user experience is improved.

## BRIEF DESCRIPTION OF THE DRAWINGS

Fig. 1 is a schematic diagram of a flow of a language model training method provided by one embodiment of the present disclosure;

Fig. 2 is a schematic diagram of a partial flow of a language model training method provided by another embodiment of the present disclosure;

Fig. 3 is a schematic diagram of a flow of a language model updating method provided by another embodiment of the present disclosure;

Fig. 4 is a system architecture diagram of language model update in an embodiment of the present disclosure;

Fig. 5 is a schematic diagram of a structure of a language model training apparatus provided by one embodiment of the present disclosure;

Fig.6 is a logic block diagram of a language model training apparatus provided by one embodiment of the present disclosure;

Fig.7 is a logic block diagram of a language model updating apparatus in a decoder cluster provided by one embodiment of the present disclosure.

## DETAILED DESCRIPTION OF THE EMBODIMENTS

The specific embodiments of the present disclosure will be further described below in detail in combination with the accompany drawings and the embodiments. The embodiments below are used for illustrating the present disclosure, rather than limiting the scope of the present disclosure.

At present, a language model based on n-gram is an important part of the voice recognition technology, which plays an important role in the accuracy of voice recognition. The language model based on n-gram is based on such an assumption that, the occurrence of the $n^{th}$ word is only associated with the previous $(n-1)^{th}$ word and is irrelevant to any other words, and the probability of the entire sentence is a product of the occurrence probabilities of the words.

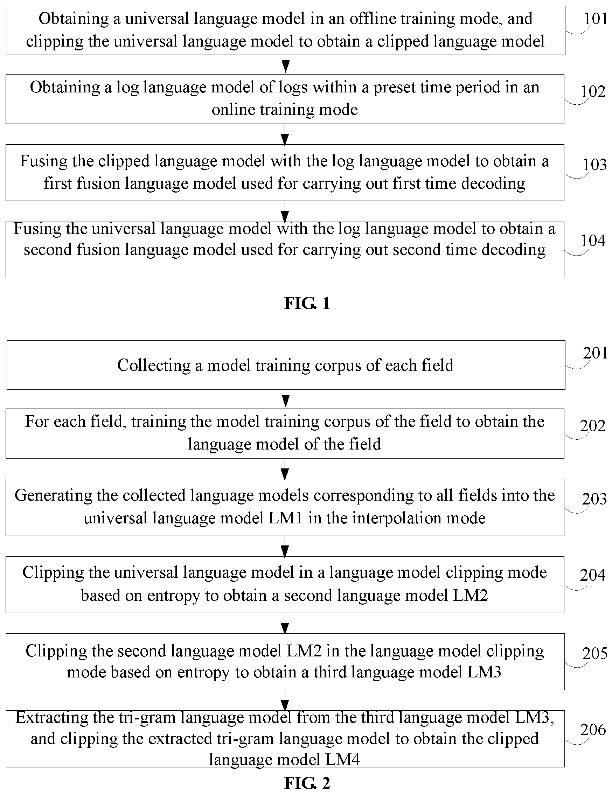

Fig. 1 shows a schematic diagram of a flow of a language model training method provided by one embodiment of the present disclosure. As shown in Fig. 1, the language model training method includes the following steps.

101, a universal language model is obtained in an offline training mode, and the universal language model is clipped to obtain a clipped language model.

For example, a model training corpus of each field can be collected; for each field, the model training corpus of the field is trained to obtain the language model of the field; and the collected language models corresponding to all fields are generated into the universal language model in an interpolation mode.

The model training corpus of the embodiment is used for establishing the language model and determining a known corpus of a model parameter.

In addition, the field can refer to application scenarios of data, such as news, place names, websites, personal names, map navigation, chat, short messages, questions and answers, micro-blogs and other common areas. In specific application, the corresponding model training corpus can be obtained by the way of professional grasping, cooperation and so on for a specific field. The embodiment of the present disclosure does not limit the specific method of specifically collecting the model training corpus of various fields.

102, a log language model of logs within a preset time period is obtained in an online training mode.

In the embodiment, firstly, the log information within the preset time period (e.g., three days, a weak or a month or the like) is obtained, for example, a corresponding log is grasped from search logs updated each day according to a rule; secondly, the log information is filtered, and word segmentation processing is carried out on the filtered log information to obtain the log model training corpus within the preset time period; and the log model training corpus is trained to obtain the log language model.

The filtering herein can refer to deleting noise information in the log information. The noise information can include punctuation, a book title mark, a wrongly written character or the like. Optionally, smooth processing can be carried out on the filtered log information to remove high frequency sentences in the log model training corpus.

In addition, the word segmentation processing of the filtered log information can be implemented in such manners as CRF word segmentation, forward minimum word segmentation, backward maximum word segmentation and forward and backward joint word segmentation or the like. In the embodiment, optionally, the word segmentation operation of the filtered log information is completed in the joint mode of the backward maximum word segmentation and the forward minimum word segmentation. And then, the situation of hybrid Chinese and English in new words/hot words can be considered.

It can be understood that, in the embodiment, the new search log information of each day is reflected into the language model used by a decoder cluster, and new search logs need to be generated into the log model training corpus at an interval of each preset time period to train the log language model.

103, the clipped language model is fused with the log language model to obtain a first fusion language model used for carrying out first time decoding.

For example, interpolation merging is carried out on the clipped language model and the log language model in the interpolation mode to obtain the first fusion language model.

Wherein, an interpolation parameter in the interpolation mode is used for adjusting the weights of the clipped language model and the log language model in the first fusion language model.

104, the universal language model is fused with the log language model to obtain a second fusion language model used for carrying out second time decoding.

For example, interpolation merging is carried out on the universal language model and the log language model in the interpolation mode to obtain the second fusion language model; and

at this time, the interpolation parameter in the interpolation mode is used for adjusting the weights of the universal language model and the log language model in the second fusion language model.

For example, when the clipped language model in the embodiment is a tri-gram language model, the first fusion language model is a tri-gram fusion language model; and

when the universal language model is a tetra-gram language model, the second fusion language model is a tetra-gram fusion language model.

It can be understood that, the language model (e.g., the tri-gram fusion language model and the tetra-gram fusion language model) for the decoder cluster obtained in the embodiment at last consider a large number of sentences of new words and new structure types, so that the sentences of these new words and new structure types are reflected in the trained log language model, and interpolation merging is carried out on the universal language model and the log language model obtained by online updating to cover the sentences of some new words and new structure types in real time.

To this end, in the embodiment, the tri-gram fusion language model is used for quickly decoding, and then the tetra-gram fusion language model is used for carrying out second time decoding to effectively improve the language recognition rate.

In another optional implementation scenario, the foregoing step 103 can specifically include the following sub-step 1031 and the sub-step 1032, which are not shown in the figure:

1031, adjusting a single sentence probability in the clipped language model according to a preset rule to obtain an adjusted language model; and

1032, carrying out interpolation merging on the adjusted language model and the log language model in the interpolation mode to obtain the first fusion language model used for carrying out first time decoding.

In addition, the foregoing step 104 can specifically include the following sub-step 1041 and the sub-step 1042, which are not shown in the figure:

1041, adjusting the single sentence probability in the universal language model according to the preset rule to obtain an adjusted universal language model; and

1042, carrying out interpolation merging on the adjusted universal language model and the log language model in the interpolation mode to obtain the second fusion language model used for carrying out second time decoding.

In the above step 1031 and the step 1041, the adjusting the single sentence probability mainly refers to carrying out some special processing on the sentence probability of two words or three words, including: decreasing or increasing the sentence probability according to a certain rule, etc.

The specific manner of the model interpolation in the step 1032 and the step 1042 will be illustrated below by examples:

assuming that two language models to be subjected to the interpolation merging are named as big_im and small_lm and the merging weight of the two language models is lambda, then the specific interpolation implementation manner can be realized by any one of the following examples 1-4.

1, traversing all n-gram in the small_lm, updating a corresponding n-gram probability value in the big_lm to (1-lambda) *P (big_lm)+$\lambda$ * P (small_lm);

2, traversing all n-gram in lm_samll, inserting the n-gram that cannot be found in the lm_samll in the big_lm, and setting the probability value thereof as lambda * P (small_lm);

3. traversing all n-gram in the small_lm, updating the corresponding n-gram probability value in the big_lm to max(P (big_lm), P (small_lm)), and at this time, the weight parameter lambda is useless; and

4. traversing all n-gram in the small_lm, updating the corresponding n-gram probability value in the big_lm to max( (1-lambda)* P (big_lm), lambda* P (small_lm)).

The above four interpolation modes can be selected according to different application field needs in practical application. In the embodiment, in order to expand the coverage of the language model to the sentences in the log information, especially the coverage of the sentences of some new words or new structure types, the solution selects the second interpolation method to carry out the corresponding interpolation operation.

According to the language model training method of the embodiment, the universal language model is obtained in the offline training mode, the log language model is obtained in the online training mode, and then, the first fusion language model used for carrying out first time decoding and the second fusion language model used for carrying out second time decoding are obtained through the universal language model and the log language model, since the log language model is generated by the corpora of new words, hot words or the like, the problem that a language model obtained offline in the prior art has poor coverage on new corpora, resulting in a reduced language recognition rate, can be solved, therefore, the language recognition rate can be improved better, and the user experience is improved.

In practical application, after the first fusion language model and the second fusion language model are obtained in the manner as shown in Fig. 1, before the two models are applied to the decoder cluster, the language recognition rates of the two models still need to be verified. For example, a compiling operation can be carried out on the two fusion language models to obtain decoding state diagrams necessary for language recognition. And then, model verification is carried out on the language models of the compiled and constructed decoding state diagrams.

Specifically, three audio corpora in a universal test set can be used for carrying out the language recognition and comparing with a marking text corpus. If the recognition text is completely the same as the marking text, the model verification is passed, and then the two fusion language models can be loaded in the decoding server of the decoder cluster; and otherwise, error information is fed back to relevant personnel.

To better illustrate the language model training method as shown in Fig. 1, the step 101 in Fig. 1 will be illustrated below in detail by Fig. 2.

201, a model training corpus of each field is collected.

For example, the model training corpora of at least six different fields can be collected, for example, Blog data, short message data, news data, encyclopedia, novel and user voice input method data, and the total data size of the six kinds of model training corpora can be larger than 1000G.

202, for each field, the model training corpus of the field is trained to obtain the language model of the field.

For example, the model training corpus of each field can be preprocessed, for example, corpus cleaning or corpus word segmentation and other preprocessing, and then the respective language model is generated according to the preprocessed model training corpus.

It should be noted that, if the scale of the model training corpus of a certain field is very large, but the scale of the trained language model of the field is limited, after the first language model of the field is trained by the model training corpus of the field, with respect to the first language model, the language model can be adjusted by employing a model clipping mode or setting a larger statistical times cutoff, so that the finally obtained language model of the field conforms to the language model of a preset scale.

203, the collected language models corresponding to all fields are generated into the universal language model LM1 in the interpolation mode.

For example, the collected language models corresponding to all fields are generated into the universal language model in a maximum posterior probability interpolation mode or a direct model interpolation mode.

204, the universal language model is clipped in a language model clipping mode based on entropy to obtain a second language model LM2.

Optionally, in specific application, prior to the step 204, a first confusion value of the universal language model on a universal test set can also be calculated, and a fluctuation range of the first confusion value is obtained; and then, when the step 204 is executed, the scale of the second language model LM2 can be applicable to the fluctuation range of the first confusion value.

205, the second language model LM2 is clipped in the language model clipping mode based on entropy to obtain a third language model LM3.

For example, prior to the step 205, a second confusion value of the second language model LM2 on the universal test set can also be calculated, and the fluctuation range of the second confusion value is obtained; and then, when the step 205 is executed, the scale of the third language model LM3 can be applicable to the fluctuation range of the second confusion value.

206, the tri-gram language model is extracted from the third language model LM3, and the extracted tri-gram language model is clipped to obtain the clipped language model LM4.

Correspondingly, when the step 206 is executed, a third confusion value of the extracted tri-gram language model on the universal test set can also be calculated, and the fluctuation range of the third confusion value is obtained; and at this time, the scale of the clipped language model LM4 is applicable to the fluctuation range of the third confusion value.

That is to say, in the step 204 to the step 206, the universal language model LM1 in the step 203 is clipped for the first time to obtain the second language model LM2, the LM2 is clipped for the second time to obtain the third language model LM3, the 3-gram language model is extracted from the LM3 and is clipped to obtain the 3-gram language model LM4 with a smaller scale.

The clipping mode of the embodiment employs the following clipping mode based on a maximum entropy model. The scale of the language model clipped at each time is set according to the fluctuation range of a ppl value obtained by the universal test set.

The embodiment does not limit the clipping mode of the language model, further, the clipping scale of the language model in the embodiment can also be set according to an empirical value, and the embodiment does not limit this neither. In addition, in order to improve the accuracy of the language recognition rate in the embodiment, the clipping is carried out for three times, in other embodiments, the clipping times can also be set according to demand, and the embodiment is merely exemplary, rather than limiting the clipping times.

In addition, the model clipping mode is mentioned in the foregoing step 202, and thus a model clipping method will be illustrated below in detail.

The model clipping method mainly employs a language model clipping method based on entropy. Specifically, assuming that the probability value of a certain n-gram on the original language model is p(.|.), and the probability value on the clipped language model is $p'(.|.)$. Relative entropy of the two language models before and after clipping is as shown in a formula (1):

$$D(p \mid p') = -\sum_{w_i, h_j} p(w_i, h_j)[\log p(w_i \mid h_j) - \log p(w_i \mid w_j)] \tag{1}$$

Wherein, in the formula (1), $w_i$ expresses all occurring words, and $h_j$ expresses historical text vocabularies. The target of the language model clipping method based on entropy is to minimize the value of $D(p \mid p')$ by selecting the clipping n-gram, so as to determine the clipped language model and the scale of the clipped language model.

In addition, the manner of setting the larger statistical times cutoff mentioned in the foregoing step 202 can be understood as follows.

Typically, the cutoff value is set for different orders of the language model, different n-word number thresholds are set in a training process, and the number of n-words in each order of language model lower than the number of the n-words of the threshold of the order is set to 0. This is because the number of the n-words is generally smaller than the cutoff value, and the statistical probability value of the calculated n-word pairs is inaccurate.

The mode of setting the larger cutoff value is mainly employed in the foregoing step 202 to control the scale of the language model. In specific application, different cutoff values of each field are set according to the empirical value. In the training process of the language model of each field, a number file of the n-words of different orders of language models can also be generated.

Further, the foregoing step 203 can be illustrated as follows.

In the step 203, the language models generated by training of all fields are generated into the universal language model LM1 in the interpolation mode. The common interpolation mode includes the maximum posterior probability interpolation mode and the direct model interpolation mode.

The maximum posterior probability interpolation method is illustrated as follows: assuming that a universal training corpus set I and a training corpus set A to be inserted are available, and the expression of the maximum posterior probability interpolation is as shown in the following formula (2):

$$P(w_i \mid w_{i-1}, w_{i-2}) = \frac{C_I(w_{i-2}, w_{i-1}, w_i) + \xi * C_A(w_{i-2}, w_{i-1}, w_i)}{C_I(w_{i-2}, w_{i-1}) + \xi * C_A(w_{i-2}, w_{i-1})} \tag{2}$$

in the formula (2), 3-gram is taken as an example for illustration, in the case of 3-gram, the occurrence probability of the current word is only relevant to the previous two words of the word. Wherein, $w_i$ expresses a word in the sentenced, $P(w_i \mid w_{i-1}, w_{i-2})$ expresses the probability value of 3-gram after interpolation, $C_I(w_{i-2}, w_{i-1}, w_i)$ expresses the number of 3-grams in the set I, $C_A(w_{i-2}, w_{i-1}, w_i)$ expresses the number of 3-grams in the set A, and $\xi$ expresses the interpolation weight of two 3-gram numbers.

The direct model interpolation method is illustrated as follows: the direct model interpolation method is to interpolate according to the above formula (2) in different weights by means of the generated language model of each field to generate a new language model, which is expressed by the following formula (3):

$$P(w_i \mid w_{i-1}, w_{i-2}) = \sum_{j=1}^{n} \lambda_j * P_j(w_i \mid w_{i-1}, w_{i-2}) \tag{3}$$

in the formula (3), 3-gram is taken as an example for illustration, in the case of 3-gram, the occurrence probability of the current word is only relevant to the previous two words of the word. Wherein, $P(w_i | w_{i-1}, w_{i-2})$ expresses the probability value of 3-gram after interpolation, $P_j(w_i | w_{i-1}, w_{i-2})$ expresses the probability value of the n-gram in the language model j before interpolation, $\lambda_j$ expresses the interpolation weight of the model j, and $n$ expresses the number of models to be interpolated.

In practical application, the weight value of each language model during the interpolation merging in the step 203 can be calculated according to the two following methods.

The first calculation method of the interpolation weight: respectively estimating the confusion degree ppl of the 6 language models listed above on the universal test set, and calculating the weight of each language model during the interpolation merging according to the ratio of ppl.

The confusion degree in the embodiment reflects the quality of the language model, and generally, the smaller the confusion degree is, the better the language model is, and the definition thereof is as follows:

$$ppl = \left[ \prod_{i=1}^{M} P(w_i \mid w_{i-n+1}, \ldots, w_{i-1}) \right]^{-\frac{1}{M}} \quad (4)$$

In the formula (4), the n-gram is taken as an example for illustration. Wherein, $P(w_i | w_{i-n+1}, ..., | w_{i-1})$ expresses the probability value of the n-gram, and $M$ expresses the number of words in the test sentence.

The second calculation method of the interpolation weight: directly setting the interpolation weight according to the size ratio of the model training corpora of different fields.

Optionally, the direct model interpolation mode can be employed in the step 203 of the embodiment to interpolate the weight of the trained language model of each field that is calculated according to the second interpolation weight calculation method to generate the universal language model, which is marked as LM1.

In combination with the method as shown in Fig. 1, an online updated search log language model is introduced in the embodiment, the interpolation operation is carried out on the language model in a mode different from that of the universal language model and the clipped language model to generate two fusion language models with different scales, and the fusion language models are provided for a rear end (e.g., the decoder cluster) for multi-time decoding, which is conducive to improving the correctness of semantic comprehension and enhancing the user experience.

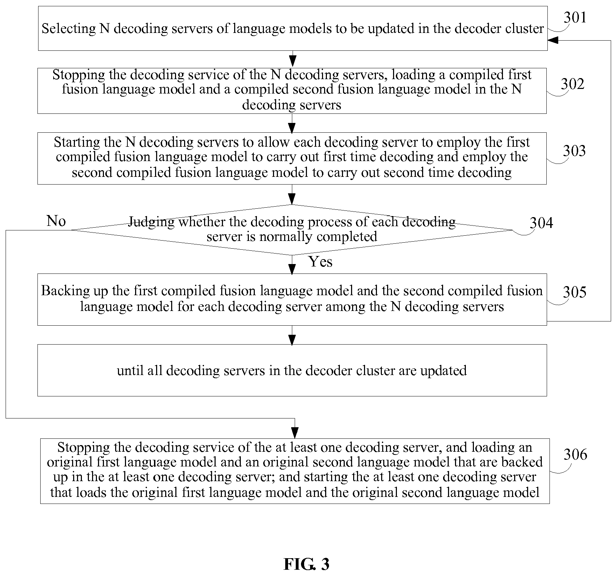

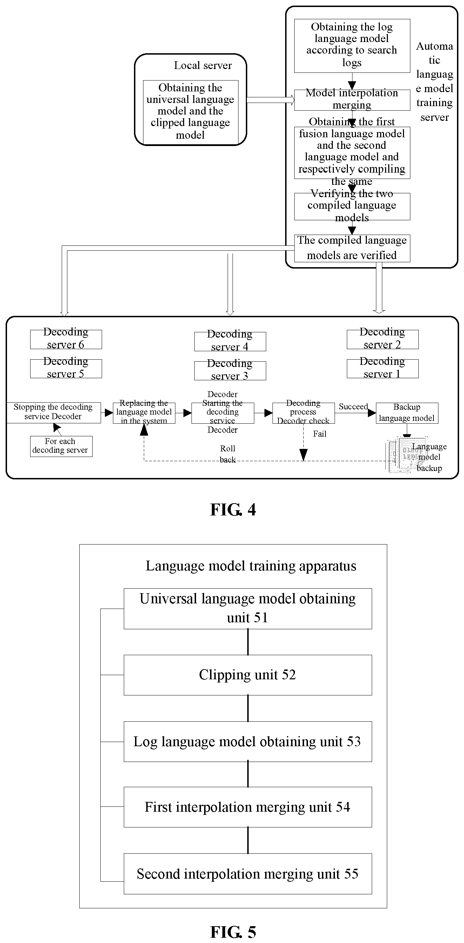

Fig. 3 shows a schematic diagram of a flow of a language model updating method provided by another embodiment of the present disclosure, Fig. 4 shows a system architecture diagram of language model update in an embodiment of the present disclosure, and in combination with Fig. 3 and Fig. 4, the language model updating method of the embodiment is as follows.

301, N decoding servers of language models to be updated are selected in the decoder cluster.

For example, the decoder cluster as shown in Fig. 4 includes 6 decoding servers.

It can be understood that, after the language model is compiled and verified, the compiled language model can be loaded in each decoding server of the decoder cluster. In the embodiment, not larger than 1/3 of the decoding servers in each decoder cluster are selected to serve as the decoding servers of the language models to be updated in the embodiment.

That is to say, in the embodiment, N is a positive integer and is smaller than or equal to 1/3 of the total number of the decoding servers in the decoder cluster.

302, the decoding service of the N decoding servers is stopped, a compiled first fusion language model and a compiled second fusion language model are loaded in the N decoding servers.

In the embodiment, the compiled first fusion language model and the compiled second fusion language model are output by an automatic language model training server as shown in Fig. 4.

In specific application, a local server obtains the universal language model and the clipped language model as shown in Fig. 1 in the offline training mode, the automatic language model training server obtains the log language model in the online training mode, obtains the first fusion language model and the second fusion language model, complies and verifies the first fusion language model and the second fusion language model, and then outputs the first fusion language model and the second fusion language model to the decoder cluster to update the language models after the first fusion language model and the second fusion language model are verified.

303, the N decoding servers are started to allow each decoding server to employ the first compiled fusion language model to carry out first time decoding and employ the second compiled fusion language model to carry out second time decoding.

For example, the loaded language model is employed to carry out voice recognition decoding. Specifically, when carrying out the first time decoding, a large decoding path network is generated by the first fusion language model, and the second fusion language model is employed to carry out the second time decoding on the basis of the decoding path.

304, whether the decoding process of each decoding server is normally completed is judged.

305, if the decoding process of each decoding server is normally completed in the step 304, the first compiled fusion language model and the second compiled fusion language model are backed up for each decoding server among the N decoding servers; and

the step of selecting the N decoding servers of the language models to be updated is repeated, until all decoding servers in the decoder cluster are updated.

306, if the decoding process of at least one decoding server is not normally completed in the step 304, the decoding service of the at least one decoding server is stopped, and an original first language model and an original second language model that are backed up in the at least one decoding server are loaded; and the at least one decoding server that loads the original first language model and the original second language model are started.

That is to say, if the decoding is successful and the decoding process is normal, the decoding server backs up the updated language model. If the decoding is failed, the decoding server deletes the loaded language model, reloads the old language model, does not update the language model, meanwhile feeds back error information and analyzes the error.

It can be understood that, if the language models in most decoding servers in the decoder cluster are successfully updated, the contents of the faulty decoding server can be manually checked, and the reloading process can be realized.

In addition, it should be noted that, before the step 302 of loading the compiled first fusion language model and the compiled second fusion language model in the N decoding servers as shown in Fig. 3, the method as shown in Fig. 3 can further include a step 300 not shown in the figure:

300, respectively compiling the first fusion language model and the second fusion language model to obtain a first decoding state diagram of the first fusion language model and a second decoding state diagram of the second fusion language model; employing a universal test set to verify the language recognition rates of the first decoding state diagram and the second decoding state diagram; and

if the language recognition rates are within a preset range, confirming that the first fusion language model and the second fusion language model are verified, and obtaining the compiled first fusion language model and the compiled second fusion language model.

Otherwise, new language models are obtained by the local server and the automatic language model training server as shown in Fig. 4.

It should be noted that, after the loading success of the decoding servers in the decoder cluster, the decoding results of different decoding servers can also be sampled and verified by a test sentence in real time. Or, in order to guarantee the normal use of the decoder cluster, a voice recognition result monitoring result can be carried out on the cluster with the language models updated by the universal test set, and a recognition result is printed and output in real time to maintain the accuracy of the voice recognition result of the universal test set within a normal fluctuation range.

That is to say, in the entire voice decoding process, the working decoding servers need to be sampled and verified by the universal test set in real time, in order to guarantee that the decoding of each decoding server in each cluster is correct, if the decoding server is faulty, the error information is fed back to the user in real time, and the error is analyzed.

Therefore, the decoder cluster can update the language models in the cluster online according to search logs collected within a certain time period, so that the word segmentation accuracy of new words and hot words is greatly improved, the accuracy of the voice recognition is improved, and the user experience of semantic comprehension is improved at last.

Fig. 5 shows a schematic diagram of a structure of a language model training apparatus provided by one embodiment of the present disclosure. As shown in Fig. 5, the language model training apparatus of the embodiment includes a universal language model obtaining unit 51, a clipping unit 52, a log language model obtaining unit 53, a first interpolation merging unit 54 and a second interpolation merging unit 55;

wherein, the universal language model obtaining unit 51 is used for obtaining a universal language model in an offline training mode;

the clipping unit 52 is used for clipping the universal language model to obtain a clipped language model;

the log language model obtaining unit 53 is used for obtaining a log language model of logs within a preset time period in an online training mode;

the first interpolation merging unit 54 is used for fusing the clipped language model with the log language model to obtain a first fusion language model used for carrying out first time decoding; and

the second interpolation merging unit 55 is used for fusing the universal language model with the log language model to obtain a second fusion language model used for carrying out second time decoding.

In the embodiment, the clipped language model is a tri-gram language model, and correspondingly, the first fusion language model is a tri-gram fusion language model; and

the universal language model is a tetra-gram language model, and correspondingly, the second fusion language model is a tetra-gram fusion language model.

For example, the log language model obtaining unit 53 can be specifically used for obtaining log information within the preset time period, filtering the log information, and carrying out word segmentation processing on the filtered log information to obtain a log model training corpus within the preset time period; and training the log model training corpus to obtain the log language model.

In specific application, the first interpolation merging unit 54 can be specifically used for carrying out interpolation merging on the clipped language model and the log language model in an interpolation mode to obtain the first fusion language model;

and/or, the second interpolation merging unit 55 can be specifically used for carrying out interpolation merging on the universal language model and the log language model in the interpolation mode to obtain the second fusion language model.

In another optional implementation scenario, the first interpolation merging unit 54 can be specifically used for adjusting a single sentence probability in the clipped language model according to a preset rule to obtain an adjusted language model;

carrying out interpolation merging on the adjusted language model and the log language model in the interpolation mode to obtain the first fusion language model;

and/or,

the second interpolation merging unit 55 can be specifically used for adjusting the single sentence probability in the universal language model according to the preset rule to obtain an adjusted universal language model; and

carrying out interpolation merging on the adjusted universal language model and the log language model in the interpolation mode to obtain the second fusion language model.

Optionally, the universal language model obtaining unit 51 can be specifically used for collecting a model training corpus of each field; for each field, training the model training corpus of the field to obtain the language model of the field; and generating the collected language models corresponding to all fields into the universal language model in the interpolation mode.

In another optional implementation scenario, the universal language model obtaining unit 51 can be specifically used for collecting a model training corpus of each field; for each field, training the model training corpus of the field to obtain the language model of the field; and generating the collected language models corresponding to all fields into the universal language model in a maximum posterior probability interpolation mode or a direct model interpolation mode.

Further, the clipping unit 52 can be specifically used for clipping the universal language model in a language model clipping mode based on entropy to obtain a second language model LM2;

clipping the second language model LM2 in the language model clipping mode based on entropy to obtain a third language model LM3; and

extracting the tri-gram language model from the third language model LM3, and clipping the extracted tri-gram language model to obtain the clipped language model LM4.

Or, in another embodiment, the clipping unit 52 can be further specifically used for calculating a first confusion value of the universal language model on a universal test set, and obtaining a fluctuation range of the first confusion value; clipping the universal language model in the language model clipping mode based on entropy to obtain the second language model LM2, wherein the scale of the second language model LM2 is applicable to the fluctuation range of the first confusion value;

calculating a second confusion value of the second language model LM2 on the universal test set, and obtaining the fluctuation range of the second confusion value;

clipping the second language model LM2 in the language model clipping mode based on entropy to obtain the third language model LM3, wherein the scale of the third language model LM3 is applicable to the fluctuation range of the second confusion value;

extracting the tri-gram language model from the third language model LM3, and clipping the extracted tri-gram language model to obtain the clipped language model LM4; and

calculating a third confusion value of the extracted tri-gram language model on the universal test set, and obtaining the fluctuation range of the third confusion value, wherein the scale of the clipped language model LM4 is applicable to the fluctuation range of the third confusion value.

The language model training apparatus of the embodiment can execute the flow of any method of Fig. 1 to Fig. 2, as recorded above, and will not be repeated redundantly herein.

The language model training apparatus of the embodiment introduces an online updated log language model, carries out interpolation operation on the language model in a mode different from that of the universal language model and the clipped language model to generate two fusion language models with different scales, and provides the fusion language models for a rear end (e.g., the decoder cluster) for multi-time decoding, which is conducive to improving the correctness of semantic comprehension and enhancing the user experience.

The language model training apparatus of the embodiment can be located in any independent device, for example, a server. Namely, the present disclosure further provides a device, and the device includes any above language model training apparatus.

In addition, in specific application, the embodiment can also realize the functions of the language model training apparatus by two or more devices, for example, a plurality of servers. For example, the local server as shown in Fig. 4 can be used for realizing the functions of the universal language model obtaining unit 51 and the clipping unit 52 in the language model training apparatus, the automatic language model training server as shown in Fig. 4 can be used for realizing the functions of the log language model obtaining unit 53, the first interpolation merging unit 54 and the second interpolation merging unit 55 in the language model training apparatus, then the automatic language model training server is connected with the decoder cluster, when obtaining a language model covering new corpora by searching the logs, the language models used in the decoding servers in the decoder cluster are updated, in this way, the problem that a language model obtained offline in the prior art has poor coverage on new corpora, resulting in a reduced language recognition rate, can be solved, therefore, the language recognition rate can be improved better, and the user experience is improved.

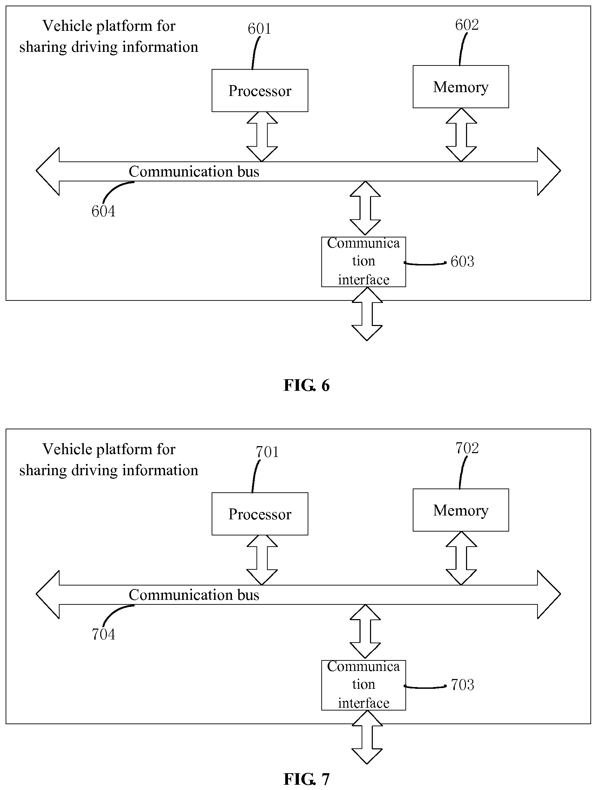

Fig.6 shows a logic block diagram of a language model training apparatus provided by one embodiment of the present disclosure. Refer to Fig.6, the apparatus includes:

a processor 601, a memory 602, a communication interface 603 and a bus 604; wherein,

the processor 601, the memory 602 and the communication interface 603 communicate with each other by the bus 604;

the communication interface 603 is used for completing the information transmission of the decoding server and a communication device of a local server;

the processor 604 is used for invoking a logic instruction in the memory 602 to execute the following method:

obtaining a universal language model in an offline training mode, and clipping the universal language model to obtain a clipped language model; obtaining a log language model of logs within a preset time period in an online training mode; fusing the clipped language model with the log language model to obtain a first fusion language model used for carrying out first time decoding; and fusing the universal language model with the log language model to obtain a second fusion language model used for carrying out second time decoding.

Refer to Fig.1, the embodiment discloses a computer program, including a program code, wherein the program code is used for executing the following operations:

obtaining a universal language model in an offline training mode, and clipping the universal language model to obtain a clipped language model;

obtaining a log language model of logs within a preset time period in an online training mode; obtaining a log language model of logs within a preset time period in an online training mode;

fusing the clipped language model with the log language model to obtain a first fusion language model used for carrying out first time decoding; and

fusing the universal language model with the log language model to obtain a second fusion language model used for carrying out second time decoding.

The embodiment discloses a storage medium, used for storing the above computer program.

Fig.7 shows a logic block diagram of a language model updating apparatus in a decoder cluster provided by one embodiment of the present disclosure. Refer to Fig.7, the apparatus includes:

a processor 701, a memory 702, a communication interface 703 and a bus 704; wherein,

the processor 701, the memory 702 and the communication interface 703 communicate with each other by the bus 704;

the communication interface 703 is used for completing the information transmission of the decoding server and a communication device of a local server;

the processor 701 is used for invoking a logic instruction in the memory 702 to execute the following method:

selecting N decoding servers of language models to be updated in the decoder cluster; stopping the decoding service of the N decoding servers, loading a compiled first fusion language model and a compiled second fusion language model in the N decoding servers; starting the N decoding servers to allow each decoding server to employ the first compiled fusion language model to carry out first time decoding and employ the second compiled fusion language model to carry out second time decoding; judging whether the decoding process of each decoding server is normally completed, and if so, backing up the first compiled fusion language model and the second compiled fusion language model for each decoding server among the N decoding servers; and repeating the step of selecting the N decoding servers of the language models to be updated, until all decoding servers in the decoder cluster are updated; wherein, the N is a positive integer and is smaller than or equal to 1/3 of the total number of the decoding servers in the decoder cluster.

Refer to Fig.3, the embodiment discloses a computer program, including a program code, wherein the program code is used for executing the following operations:

selecting N decoding servers of language models to be updated in the decoder cluster;

stopping the decoding service of the N decoding servers, loading a compiled first fusion language model and a compiled second fusion language model in the N decoding servers;

starting the N decoding servers to allow each decoding server to employ the first compiled fusion language model to carry out first time decoding and employ the second compiled fusion language model to carry out second time decoding;

judging whether the decoding process of each decoding server is normally completed, and if so, backing up the first compiled fusion language model and the second compiled fusion language model for each decoding server among the N decoding servers; and

repeating the step of selecting the N decoding servers of the language models to be updated, until all decoding servers in the decoder cluster are updated; and

wherein, the N is a positive integer and is smaller than or equal to 1/3 of the total number of the decoding servers in the decoder cluster.

The embodiment discloses a storage medium, used for storing the above computer program.
Those of ordinary skill in the art can understand that all or a part of the steps in the above method embodiment can be implemented by a program instructing corresponding hardware, the foregoing program can be stored in a computer readable storage medium, and when being executed, the program can execute the steps including the above method embodiment; and the foregoing storage medium includes various media capable of storing program codes, such as a ROM, a RAM, a magnetic disk or an optical disk, etc.
In addition, those skilled in the art can understand that although some embodiments described herein include some features included in other embodiments, rather than other features, the combination of the features of different embodiments is meant to be within the scope of the present disclosure and forms different embodiments. For example, in the following claims, any embodiment to be protected can be used in any combination mode.
It should be noted that, the above embodiments are illustration of the present disclosure, rather than limiting the present disclosure, and that those skilled in the art can design alternative embodiments without departing from the scope of the appended claims. In the claims, any reference symbols located between brackets should not cause limitation to the claims. The word "including" does not exclude elements or steps not listed in the claims. The word "a" or "one" in front of an element does not exclude the existence of a plurality of such elements. The present disclosure can be implemented by hardware including a plurality of different elements or a properly programmed computer. In unit claims listing a plurality of apparatuses, multiple apparatuses among these apparatuses can be specifically implemented by the same hardware. The use of the words first, second and third and the like does not represent any sequence. These words can be interpreted as names.
Finally, it should be noted that the above-mentioned embodiments are merely used for illustrating the technical solutions of the present disclosure, rather than limiting them; although the present disclosure has been described in detail with reference to the foregoing embodiments, those of ordinary skill in the art should understand that they could still make modifications to the technical solutions recorded in the foregoing embodiments or make equivalent substitutions to a part of or all technical features therein; and these modifications or substitutions do not make the essence of the corresponding technical solutions depart from the scope defined by the claims of the present disclosure.

**Claims**

1. A language model training method, comprising:

obtaining a universal language model in an offline training mode, and clipping the universal language model to obtain a clipped language model;
obtaining a log language model of logs within a preset time period in an online training mode;
fusing the clipped language model with the log language model to obtain a first fusion language model used for carrying out first time decoding; and
fusing the universal language model with the log language model to obtain a second fusion language model used for carrying out second time decoding.

2. The method of claim 1, wherein the obtaining a log language model of logs within a preset time period in an online training mode comprises:

obtaining log information within the preset time period, filtering the log information, and carrying out word segmentation processing on the filtered log information to obtain a log model training corpus within the preset time period; and
training the log model training corpus to obtain the log language model.

3. The method of claim 1, wherein the clipped language model is a tri-gram language model, and correspondingly, the first fusion language model is a tri-gram fusion language model; and
the universal language model is a tetra-gram language model, and correspondingly, the second fusion language model is a tetra-gram fusion language model.

4. The method of any one of claims 1-3, wherein the obtaining a universal language model in an offline training mode comprises:

collecting a model training corpus of each field;
for each field, training the model training corpus of the field to obtain the language model of the field; and
generating the collected language models corresponding to all fields into the universal language model in the interpolation mode.

5. The method of claim 4, wherein the clipping the universal language model to obtain a clipped language model comprises:

clipping the universal language model in a language model clipping mode based on entropy to obtain a second language model LM2;
clipping the second language model LM2 in the language model clipping mode based on entropy to obtain a third language model LM3; and
extracting the tri-gram language model from the third language model LM3, and clipping the extracted tri-gram language model to obtain the clipped language model LM4.

6. A language model updating method in a decoder cluster, comprising:

selecting N decoding servers of language models to be updated in the decoder cluster;
stopping the decoding service of the N decoding servers, loading a compiled first fusion language model and a compiled second fusion language model in the N decoding servers;
starting the N decoding servers to allow each decoding server to employ the first compiled fusion language model to carry out first time decoding and employ the second compiled fusion language model to carry out second time decoding;
judging whether the decoding process of each decoding server is normally completed, and if so, backing up the first compiled fusion language model and the second compiled fusion language model for each decoding server among the N decoding servers; and

repeating the step of selecting the N decoding servers of the language models to be updated, until all decoding servers in the decoder cluster are updated; and

wherein, the N is a positive integer and is smaller than or equal to 1/3 of the total number of the decoding servers in the decoder cluster.

7. The method of claim 6, further comprising:

if the decoding process of at least one decoding server is not normally completed, stopping the decoding service of the at least one decoding server, and loading an original first language model and an original second language model that are backed up in the at least one decoding server; and starting the at least one decoding server that loads the original first language model and the original second language model.

8. A language model training apparatus, comprising:

a universal language model obtaining unit, used for obtaining a universal language model in an offline training mode;
a clipping unit, used for clipping the universal language model to obtain a clipped language model;
a log language model obtaining unit, used for obtaining a log language model of logs within a preset time period in an online training mode;
a first interpolation merging unit, used for fusing the clipped language model with the log language model to obtain a first fusion language model used for carrying out first time decoding; and
a second interpolation merging unit, used for fusing the universal language model with the log language model to obtain a second fusion language model used for carrying out second time decoding.

9. The apparatus of claim 8, wherein the log language model obtaining unit is specifically used for:

obtaining log information within the preset time period, filtering the log information, and carrying out word segmentation processing on the filtered log information to obtain a log model training corpus within the preset time period; and
training the log model training corpus to obtain the log language model.

10. The apparatus of claim 8, wherein the clipped language model is a tri-gram language model, and correspondingly, the first fusion language model is a tri-gram fusion language model; and
the universal language model is a tetra-gram language model, and correspondingly, the second fusion language model is a tetra-gram fusion language model.

11. The apparatus of any one of claims 8-10, wherein the universal language model obtaining unit is specifically used for:

collecting a model training corpus of each field;
for each field, training the model training corpus of the field to obtain the language model of the field; and
generating the collected language models corresponding to all fields into the universal language model in the interpolation mode.

12. The apparatus of claim 11, wherein the clipping unit is specifically used for:

clipping the universal language model in a language model clipping mode based on entropy to obtain a second language model LM2;
clipping the second language model LM2 in the language model clipping mode based on entropy to obtain a third language model LM3; and
extracting the tri-gram language model from the third language model LM3, and clipping the extracted tri-gram language model to obtain the clipped language model LM4.

13. A device, comprising the language model training apparatus of any one of claims 8-12.

14. A language model training apparatus, comprising:

a processor, a memory, a communication interface and a bus; wherein,
the processor, the memory and the communication interface communicate with each other by the bus;

the communication interface is used for completing the information transmission of the decoding server and a communication device of a local server;

the processor is used for invoking a logic instruction in the memory to execute the following method:

obtaining a universal language model in an offline training mode, and clipping the universal language model to obtain a clipped language model; obtaining a log language model of logs within a preset time period in an online training mode; fusing the clipped language model with the log language model to obtain a first fusion language model used for carrying out first time decoding; and fusing the universal language model with the log language model to obtain a second fusion language model used for carrying out second time decoding.

15. A computer program, comprising a program code, wherein the program code is used for executing the following operations:

obtaining a universal language model in an offline training mode, and clipping the universal language model to obtain a clipped language model;

obtaining a log language model of logs within a preset time period in an online training mode; obtaining a log language model of logs within a preset time period in an online training mode;

fusing the clipped language model with the log language model to obtain a first fusion language model used for carrying out first time decoding; and

fusing the universal language model with the log language model to obtain a second fusion language model used for carrying out second time decoding.

16. A storage medium, used for storing the computer program of claim 15.

17. A language model updating apparatus in a decoder cluster, comprising:

a processor, a memory, a communication interface and a bus; wherein,

the processor, the memory and the communication interface communicate with each other by the bus;

the communication interface is used for completing the information transmission of the decoding server and a communication device of a local server;

the processor is used for invoking a logic instruction in the memory to execute the following method:

selecting N decoding servers of language models to be updated in the decoder cluster; stopping the decoding service of the N decoding servers, loading a compiled first fusion language model and a compiled second fusion language model in the N decoding servers; starting the N decoding servers to allow each decoding server to employ the first compiled fusion language model to carry out first time decoding and employ the second compiled fusion language model to carry out second time decoding; judging whether the decoding process of each decoding server is normally completed, and if so, backing up the first compiled fusion language model and the second compiled fusion language model for each decoding server among the N decoding servers; and repeating the step of selecting the N decoding servers of the language models to be updated, until all decoding servers in the decoder cluster are updated; wherein, the N is a positive integer and is smaller than or equal to 1/3 of the total number of the decoding servers in the decoder cluster.

18. A computer program, comprising a program code, wherein the program code is used for executing the following operations:

selecting N decoding servers of language models to be updated in the decoder cluster;

stopping the decoding service of the N decoding servers, loading a compiled first fusion language model and a compiled second fusion language model in the N decoding servers;

starting the N decoding servers to allow each decoding server to employ the first compiled fusion language model to carry out first time decoding and employ the second compiled fusion language model to carry out second time decoding;

judging whether the decoding process of each decoding server is normally completed, and if so, backing up the first compiled fusion language model and the second compiled fusion language model for each decoding server among the N decoding servers; and

repeating the step of selecting the N decoding servers of the language models to be updated, until all decoding servers in the decoder cluster are updated; and

wherein, the N is a positive integer and is smaller than or equal to 1/3 of the total number of the decoding servers in the decoder cluster.

**19.** A storage medium, used for storing the computer program of claim 18.

| Obtaining a universal language model in an offline training mode, and clipping the universal language model to obtain a clipped language model | 101 |

| Obtaining a log language model of logs within a preset time period in an online training mode | 102 |

| Fusing the clipped language model with the log language model to obtain a first fusion language model used for carrying out first time decoding | 103 |

| Fusing the universal language model with the log language model to obtain a second fusion language model used for carrying out second time decoding | 104 |

**FIG. 1**

| Collecting a model training corpus of each field | 201 |

| For each field, training the model training corpus of the field to obtain the language model of the field | 202 |

| Generating the collected language models corresponding to all fields into the universal language model LM1 in the interpolation mode | 203 |

| Clipping the universal language model in a language model clipping mode based on entropy to obtain a second language model LM2 | 204 |

| Clipping the second language model LM2 in the language model clipping mode based on entropy to obtain a third language model LM3 | 205 |

| Extracting the tri-gram language model from the third language model LM3, and clipping the extracted tri-gram language model to obtain the clipped language model LM4 | 206 |

**FIG. 2**

Selecting N decoding servers of language models to be updated in the decoder cluster — 301

Stopping the decoding service of the N decoding servers, loading a compiled first fusion language model and a compiled second fusion language model in the N decoding servers — 302

Starting the N decoding servers to allow each decoding server to employ the first compiled fusion language model to carry out first time decoding and employ the second compiled fusion language model to carry out second time decoding — 303

No — Judging whether the decoding process of each decoding server is normally completed — 304

Yes

Backing up the first compiled fusion language model and the second compiled fusion language model for each decoding server among the N decoding servers — 305

until all decoding servers in the decoder cluster are updated

Stopping the decoding service of the at least one decoding server, and loading an original first language model and an original second language model that are backed up in the at least one decoding server; and starting the at least one decoding server that loads the original first language model and the original second language model — 306

**FIG. 3**

## FIG. 4

Local server

Obtaining the universal language model and the clipped language model

Obtaining the log language model according to search logs

Model interpolation merging

Obtaining the first fusion language model and the second language model and respectively compiling the same

Verifying the two compiled language models

The compiled language models are verified

Automatic language model training server

Decoding server 6

Decoding server 5

Decoding server 4

Decoding server 3

Decoding server 2

Decoding server 1

Stopping the decoding service Decoder

For each decoding server

Replacing the language model in the system

Decoder
Starting the decoding service
Decoder

Decoding process
Decoder check

Roll back

Succeed

Fail

Backup language model

Language model backup

**FIG. 4**

## Language model training apparatus

Universal language model obtaining unit 51

Clipping unit 52

Log language model obtaining unit 53

First interpolation merging unit 54

Second interpolation merging unit 55

**FIG. 5**

**FIG. 6**

**FIG. 7**

<table>
<tr><td colspan="2">**INTERNATIONAL SEARCH REPORT**</td><td>International application No.<br><br>**PCT/CN2016/084959**</td></tr>
</table>

**A.  CLASSIFICATION OF SUBJECT MATTER**

G10L 15/183 (2013.01) i; G10L 15/06 (2013.01) i

According to International Patent Classification (IPC) or to both national classification and IPC

**B.  FIELDS SEARCHED**

Minimum documentation searched (classification system followed by classification symbols)

G10L 15/-; G06F 9/-;

Documentation searched other than minimum documentation to the extent that such documents are included in the fields searched

Electronic data base consulted during the international search (name of data base and, where practicable, search terms used)

CNPAT, WPI, EPODOC, CNKI: language model, global, journal, pruning, select, intercept, language?, model?, universal+, background+, log, cut+, delet+, connect+, interpolat+, combin+, incorporat+, fus+, updat+, audio?, speech+, voice?, sound?, recogni+, decod+.

**C.  DOCUMENTS CONSIDERED TO BE RELEVANT**

| Category* | Citation of document, with indication, where appropriate, of the relevant passages | Relevant to claim No. |
|---|---|---|
| Y | CN 102623010 A (BEIJING BAIDU NETCOM SCIENCE AND TECHNOLOGY CO., LTD.), 01 August 2012 (01.08.2012), description, paragraphs [0030]-[0045] and [0061]-[0067], and figures 1-3 and 5 | 1-19 |
| Y | CN 103164198 A (TENCENT INC.), 19 June 2013 (19.06.2013), description, paragraphs [0042]-[0073], and figure 1 | 1-19 |
| Y | JP 2010054685 A (JAPAN BROADCASTING CORP.), 11 March 2010 (11.03.2010), description, paragraphs [0028]-[0039], and figure 1 | 6-7, 17-19 |
| A | CN 103871402 A (BEIJING BAIDU NETCOM SCIENCE AND TECHNOLOGY CO., LTD.), 18 June 2014 (18.06.2014), the whole document | 1-19 |
| A | CN 104885071 A (NUANCE COMMUNICATIONS, INC.), 02 September 2015 (02.09.2015), the whole document | 1-19 |
| A | US 2007233487 A1 (COHEN, M.H. et al.), 04 October 2007 (04.10.2007), the whole document | 1-19 |
| A | US 2009313017 A1 (NAKAZAWA, S. et al.), 17 December 2009 (17.12.2009), the whole document | 1-19 |

☐ Further documents are listed in the continuation of Box C.          ☒ See patent family annex.

| | | |
|---|---|---|
| *  Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "E"  earlier application or patent but published on or after the international filing date | "X" | document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | | |
| "P"  document published prior to the international filing date but later than the priority date claimed | "&" | document member of the same patent family |

| Date of the actual completion of the international search | Date of mailing of the international search report |
|---|---|
| 18 August 2016 (18.08.2016) | **30 August 2016 (30.08.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**KANG, Dandan**<br><br>Telephone No.: (86-10) **62413593** |

Form PCT/ISA/210 (second sheet) (July 2009)

# INTERNATIONAL SEARCH REPORT

International application No.

**PCT/CN2016/084959**

**Box No. III   Observations where unity of invention is lacking (Continuation of item 3 of first sheet)**

This International Searching Authority found multiple inventions in this international application, as follows:

[1] I: claims 1, 8, 13, 14, 15 and 16 relate to a language model training method, apparatus and device, a computer program and a storage medium.

[2] II: II: claims 6, 17, 18, and 19 relate to a language model updating method and apparatus, a computer program and a storage medium in a decoder cluster.

[3] The common technical features between the above-mentioned two groups of claims are "a first fusion language model for performing first decoding" and "a second fusion language model for performing second decoding"; however, compared to the combination of D1 (CN 102623010 A) and D2 (CN 103164198 A) and common knowledge, the above-mentioned training methods of a first fusion language model and second fusion language model do not involve an inventive step. Therefore, the same technical features mentioned above do not make a contribution over the prior art, and cannot constitute the special technical features according to the requirements of PCT Rule 13.2, and accordingly, the above-mentioned two groups of claims lack unity of invention under PCT Rule 13.1.

[4] Based on the contents specified in the description and claims of the present application, it might reasonably be expected that the feature "a compiled first fusion language model and second fusion language model are obtained through the language model training method of claim 1" is added to claims 6, 17 and 18 so as to overcome the above-mentioned defects.

1. ☐   As all required additional search fees were timely paid by the applicant, this international search report covers all searchable claims.

2. ☒   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on protest**        ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet (2)) (July 2009)

**INTERNATIONAL SEARCH REPORT**
Information on patent family members

| International application No. |
| --- |
| **PCT/CN2016/084959** |

| Patent Documents referred in the Report | Publication Date | Patent Family | Publication Date |
| --- | --- | --- | --- |
| CN 102623010 A | 01 August 2012 | CN 102623010 B | 02 September 2015 |
| CN 103164198 A | 19 June 2013 | None | |
| JP 2010054685 A | 11 March 2010 | JP 4928514 B2 | 09 May 2012 |
| CN 103871402 A | 18 June 2014 | None | |
| CN 104885071 A | 02 September 2015 | US 9361292 B2 | 07 June 2016 |
| | | EP 2909736 A1 | 26 August 2015 |
| | | US 9035884 B2 | 19 May 2015 |
| | | US 8983849 B2 | 17 March 2015 |
| | | US 2015234807 A1 | 20 August 2015 |
| | | KR 20150074075 A | 01 July 2015 |
| | | EP 2909736 A4 | 11 May 2016 |
| | | WO 2014062851 A1 | 24 April 2014 |
| | | US 2014108018 A1 | 17 April 2014 |
| | | US 2014108003 A1 | 17 April 2014 |
| US 2007233487 A1 | 04 October 2007 | US 8423359 B2 | 16 April 2013 |
| | | US 2011213613 A1 | 01 September 2011 |
| | | US 8447600 B2 | 21 May 2013 |
| | | EP 2008189 A2 | 31 December 2008 |
| | | EP 2437181 B1 | 26 November 2014 |
| | | WO 2007118100 A2 | 18 October 2007 |
| | | US 2013246065 A1 | 19 September 2013 |
| | | EP 2453436 B1 | 11 June 2014 |
| | | AT 524777 T | 15 September 2011 |
| | | US 9159316 B2 | 13 October 2015 |
| | | US 2016035345 A1 | 04 February 2016 |
| | | EP 2008189 B1 | 14 September 2011 |
| | | US 7756708 B2 | 13 July 2010 |
| | | EP 2437181 A1 | 04 April 2012 |
| | | US 2013006640 A1 | 03 January 2013 |
| | | EP 2453436 A2 | 16 May 2012 |
| US 2009313017 A1 | 17 December 2009 | WO 2008004663 A1 | 10 January 2008 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2015107192435